Europäisches Patentamt

European Patent Office

Office européen des brevets

(19)

(11) Publication number: **0 075 467**
A1

(12) # EUROPEAN PATENT APPLICATION

(21) Application number: **82304922.6**

(22) Date of filing: **17.09.82**

(51) Int. Cl.³: **G 01 N 31/12**

(30) Priority: **18.09.81 JP 148366/81**

(43) Date of publication of application: **30.03.83**
**Bulletin 83/13**

(84) Designated Contracting States: **BE DE GB IT NL**

(71) Applicant: **SUMITOMO CHEMICAL COMPANY, LIMITED,**
**15 Kitahama 5-chome Higashi-ku, Osaka-shi Osaka-fu**
**(JP)**

(72) Inventor: **Itoh, Tadamasa,**
**10-1 Sonehigashi-machi, 2-chome, Toyonaka-shi**
**Osaka-fu (JP)**

(74) Representative: **Allard, Susan Joyce et al, BOULT,**
**WADE & TENNANT 27 Furnival street, London EC4A 1PQ**
**(GB)**

(54) **Method for analyzing total trace nitrogen.**

(57) A method for analyzing total trace nitrogen in liquid or solid samples, which comprises passing oxygen or air as a carrier gas through a reaction tube packed with an oxidation catalyst or oxidizing agent heated at a temperature in the range of from 550 °C to 1,000 °C, introducing a sample of a nitrogen containing compound into the reaction tube to convert the compound into nitrogen monoxide and nitrogen dioxide, oxidizing the nitrogen monoxide into nitrogen dioxide with an aqueous acidic potassium permanganate solution, and determining the resultant total nitrogen dioxide by the Saltzman method.

- 1 -

## METHOD FOR ANALYZING TOTAL TRACE NITROGEN

The present invention relates to a method for analyzing total trace nitrogen, principally, in liquid or solid samples.

Recently, in connection with air pollution caused by nitrogen oxides or the nutritional enrichment of water, it has become important to determine the nitrogen content of fuels such as heavy oils and coals, waste water and environmental water.

Hitherto, for analyzing the nitrogen content in liquid and solid samples, the Kjeldahl method, Dumas method, ter Muelen method or chemiluminescence method has been employed. In particular, the Kjeldahl method has been widely·employed in various fields for some time. However, in order to obtain accurate analytical values by this method, various pre-treatments are necessary depending upon the form of the nitrogen compounds, and this requires a high degree of technique and skill. Whilst various improved Dumas methods, in which combustion oxidation and reduction are carried out with a mixture of an inert gas and oxygen, enables the accurate determination of the absolute amount of nitrogen to be determined as nitrogen gas, they are not suitable for micro analysis in terms of their sensitivity.

A combination of the ter Muelen method, in which nitrogen compounds are converted to ammonia by hydrogenative decomposition, with coulometric titration or electro-conductometry needs attention to be paid to safety, for example to gas leaks, because it employs a large quantity of hydrogen at high temperatures. Furthermore, this combination has defects in that only liquid samples which are aqueous solutions or in which limited organic solvents are employed can be determined, and that samples containing oxidizing substances such as peroxides cannot be determined. A method is also known which comprises introducing a sample into a reaction tube optionally packed with an oxidizing agent and heated to a high temperature while passing oxygen or air therethrough, thereby converting any nitrogen compounds in the sample to nitrogen monoxide by combustion or oxidation, and then detecting and determining the nitrogen monoxide thus formed by a chemiluminescence method. Using this method the nitrogen content can be determined with the highest sensitivity among prior-art techniques.

In this method however, nitrogen monoxide and nitrogen dioxide are formed at the same time by the combustion or oxidation of the nitrogen compound, and the ratio of their formation varies with the particular compound and the temperature. Consequently, this method is not sufficiently accurate for the purpose of the detection and determination of nitrogen monoxide alone. Furthermore, samples producing large quantities of combustion gas or oxidation gas such as carbon dioxide unfavourably interfere with this method.

In view of the drawbacks of the known methods, we have now found that the total trace nitrogen in liquid and solid samples can be determined by passing oxygen or air through an oxidation catalyst or oxidizing agent layer heated to a high temperature, introducing a sample into the layer to convert the nitrogen compound contained therein to nitrogen monoxide or nitrogen dioxide, oxidizing the nitrogen monoxide to nitrogen dioxide with an aqueous solution of acidic potassium permanganate, permitting the absorption/colour development liquid of the Saltzman method to completely absorb the total nitrogen dioxide and then measuring the absorbance at 545 mm of the orange red colour of the resulting azo compound produced.

Accordingly, the present invention provides a method for analyzing total trace nitrogen in a sample which comprises passing oxygen or air as a carrier gas through a reaction tube packed with an oxidation catalyst or oxidizing agent heated at a temperature in the range of from $550^{\circ}C$ to $1,000^{\circ}C$, introducing a sample of a nitrogen-containing compound into the reaction tube to convert the compound into nitrogen monoxide and nitrogen dioxide, oxidizing the nitrogen monoxide into nitrogen dioxide with an aqueous acidic potassium permanganate solution, and determining the resultant total nitrogen dioxide.

The oxidation catalyst used in converting nitrogen compounds to nitrogen oxides by the method of the present invention may be, for example, a palladium or platinum catalyst and the oxidizing agent used  may be, for exmaple, cobalt oxide or copper oxide.  The oxidation catalysts or oxidizing agents may be in such a form that gaseous substances formed by the introduction of the sample do not instantaneously pass through the catalyst or agent layer, and those catalysts or agents are preferred which have a suitable adsorbing power.  For example, from 0.3 to 3. wt% palladium or platinum supported on 250 to 840 $\mu$m alumina, 250 to 840 $\mu$m granular tricobalt tetroxide or cobalt sesquioxide or 250 to 840 $\mu$m granular porous copper oxide are suitable.

The reaction tube packed with these oxidation catalysts or oxidizing agents is preferably made of quartz   and the temperature of the oxidation catalyst or oxidizing agent layer is preferably in the range of from 550$^{\circ}$C. to 1,000$^{\circ}$C.  When the temperature is below 550$^{\circ}$C, the detection percentage largely changes depending upon the form of the nitrogen compounds, and the coefficient of variation becomes wide.  When an oxidation catalyst consisting of palladium or platinum supported on alumina is used at a

temperature above 1000$^O$C, nitrogen gas is oxidized into nitrogen oxides to such a degree as to affect measurement. When tricobalt tetroxide or cobalt sesquioxide is used at a temperature above 900$^O$C, it reacts with the quartz tube and is converted into cobalt monoxide, which results in it shrinking and losing its contact efficiency. Consequently, it is suitable for use at a temperature not higher than 900$^O$C. Furthermore, when copper oxide is used at a temperature above 950$^O$C in oxygen gas, it reacts with the quartz tube which results in the deterioration and collapse thereof.

After a nitrogen compound has been converted into nitrogen oxides, the determination of the nitrogen oxides in the gas is usually effected by the Saltzman method which is widely known as a method for the determination of nitrogen oxides in the atmosphere or exhaust gases. The flow rate of oxygen or air when this method is applied is preferably not less than 250 ml/min, and when it is less than this value, the nitrogen dioxide formed is poorly absorbed into the absorption/colour development liquid used in the Saltzman method. The concentration of potassium permanganate in the aqueous acidic potassium permanganate solution used for oxidizing nitrogen monixide into nitrogen dioxide is preferably from 1 to 6 wt%, and the concentration of sulfuric acid in the solution is preferably 1 to 10 wt%.

The following composition is suitable for use as the absorption/colour development liquid in the Saltzman method: N-(1-naphthyl)ethylenediamine dihydrochloride, 0.002 to 0.01 wt%; sulfanilic acid, 0.3 to 0.5 wt%; and acetic acid,3 to 15 wt%.

In order to improve the absorption percentage of nitrogen dioxide, it is preferred to add not less than 1 wt%, preferably from 1 to 3 wt% of a neutral salt to the absorption/colour development liquid. The neutral salt may be any of those containing no nitrite ions as an impurity. Specific examples are sodium chloride, potassium chloride, sodium sulfate and potassium sulfate.

The spectrophotometer used for the measurement of absorbance after the nitrogen dioxide has been absorbed into the absorption/colour development liquid of the Saltzman method is preferably a self-recording spectrophotometer which can freely set up the full scale of absorbance.

The method of the present invention will be illustrated in more detail with reference to the accompanying drawings, but it should be understood that the drawings are merely illustrative and the description in relation thereto is only of preferred embodiments of the method and apparatus of the present invention.

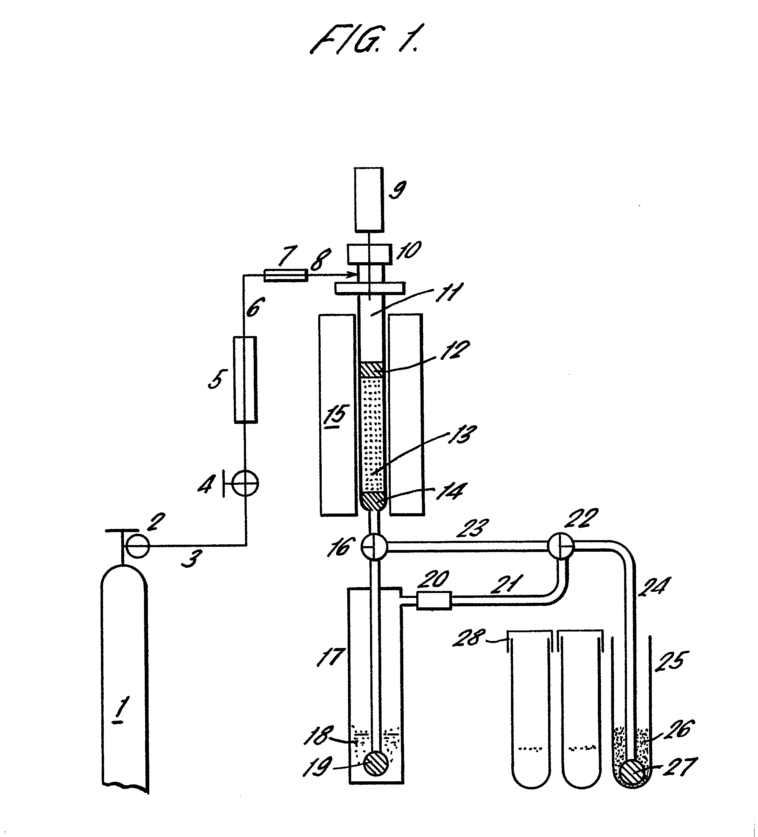

Fig. 1 is a schematic diagram of an apparatus for use in the method of this invention in which all of the nitrogen compounds in an aqueous solution sample are converted into nitrogen dioxide, or more specifically nitrogen monoxide produced in the oxidization step of nitrogen compounds is converted into nitrogen dioxide by passing through an oxidization catalyst or oxidizing agent layer, and then formed nitrogen dioxide alone is absorbed into the absorption/color development liquid of the Saltzman method to develop a color.

1 is a carrier gas bomb, and oxygen or air may be used as the carrier gas. A carrier gas is led into a reaction tube 11 though a pressure reducer 2, a conduit 3, a flow controller 4, a flow meter 5, a conduit 6, a counter flow preventing capillary tube 7, a conduit 8 and a sample feed part 10. As the flow controller, "mass flow-type" of a constant flow amount form is more preferred than a bellows-type constant pressure flow amount control form, and a suitable flow controller is such a type that the flow rate can freely be set up in the range of 100 to 1,000 ml/min with an accuracy of ±20 ml. The counter flow preventing capillary tube 7 is intended to prevent the counter flow of gaseous products when a sample is introduced, and those having an inside diameter of 0.2 to 0.6 mm and a length of not less than 3 cm are suitable.

The reaction tube 11 is preferably made of transparent quartz in terms of fabrication and visual observation of the inside, and suitable reaction tube is a tube having an inside diameter of 12 to 25 mm, a length of 20 to 50 cm and the outside diameter of the lower part being reduced to 6 to 10 mm. As a substance, 12 and 14, for fixing the oxidation catalyst or oxidizing agent 13 in the reaction tube at both the upper and lower parts, quartz cotton or ceramics wool of 1 to 10 μm in diameter may be used. As an electric furnace 15 for heating the reaction tube, such a one is suitable that the temperature can freely be controlled in the range of 400°C to 1,200°C with an accuracy of ±20°C.

As a sample feeder 9 for introducing a sample into the reaction tube at the upper part, automatic injectors or microsyringes may be used. Gaseous products such as $H_2O$, $CO_2$, NO, $NO_2$, etc. formed by introducing the sample into the reaction tube are led into an oxidation tube 17 through a three-way cock 16 together with a carrier gas. Nitrogen monoxide in the gaseous products is oxidized into nitrogen dioxide by contact with an acid potassium permanganate solution 18 in the oxidation tube 17.

As to the form of a part at which nitrogen monoxide comes into contact with the acid potassium permanganate solution, 1G or 2G glass filter 19 is more suitable than a nozzle type in terms of oxidation efficiency. The gas from the oxidation tube is introduced into an absorption/color development liquid 26 in a threaded test tube 25 through a splash removing tube 20, a conduit 21, a three-way cock 22, a conduit 24 and a glass filter 27, and nitrogen dioxide in the gas is absorbed into the liquid to develop a color by diazotization/coupling reaction. The three-way cocks 16 and 22 are preferably made of Teflon which does not adsorb nitrogen dioxides. The oxidation tube 17 is preferably made of glass having an inside diameter of 20 to 50 mm and a height of 10 to 20 cm. The splash removing tube 20 is intended to prevent undesirable entrance of the splash of the acid potassium permanganate solution into the absorption/color development liquid, and a glass tube of 6 to 15 mm in inside diameter and 3 to 6 cm in length is usually used, wherein 1 to 10 μm quartz cotton is packed. The conduit 21 is preferably a silicon rubber or Teflon tube which does not adsorb nitrogen dioxide. The threaded test tube 25 for the absorption/color development liquid is preferably a one having an inside diameter of 20 to 30 mm and a height of 12 to 18 cm, and before and after the absorption/color development operation of nitrogen dioxide, it is desirable to seal the tube tightly with a cap 28 in order to eliminate error due to the absorption of nitrogen dioxide in air. The volume of the absorption/color development liquid placed in the threaded test tube 25 is preferably 3 to 20 ml. As for a part at which nitrogen dioxide comes into contact with the liquid, 2G or 3G glass filter 27 is suitable in terms of absorption efficiency.

In order to know the volume of nitrogen dioxide in the gaseous product leaving the reaction tube, the cocks 16 and 22 may be turned so that the gaseous product flows in order of the cock 16, conduit 23, cock 22 and conduit 24.

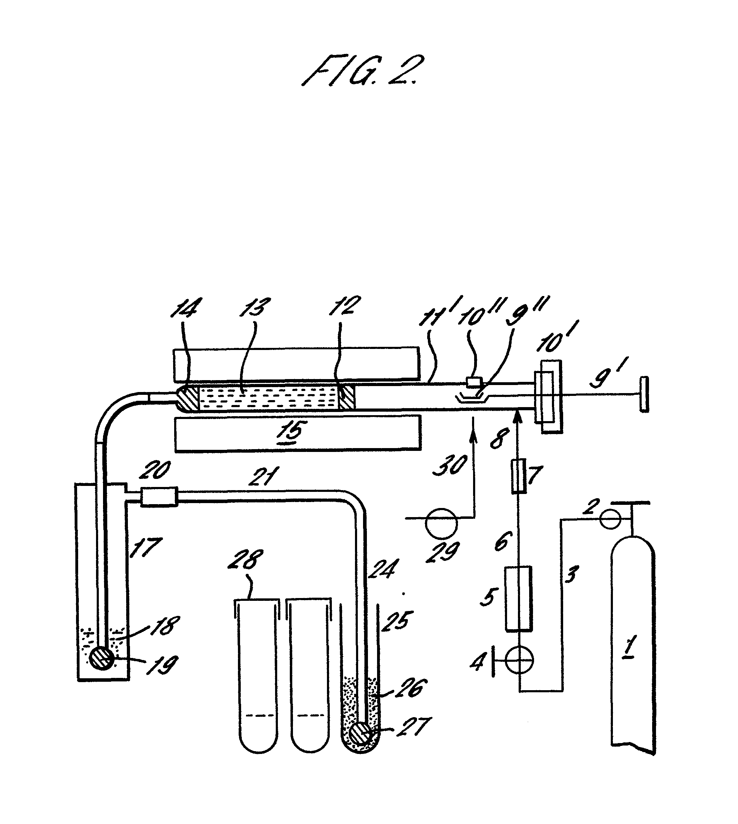

Fig. 2 is one embodiment of the schematic diagram of apparatus used in the method of the present invention, in which nitrogen compounds in a liquid or solid sample are converted into nitrogen dioxide and all the nitrogen dioxides thus formed are absorbed into the absorption/color development liquid of the Saltzman method to develop a color.

In the apparatus of Fig. 1, explosion occurs on direct introduction of organic solvent samples, so that organic solvents must not be introduced. The apparatus of Fig. 2 is usable for liquid or solid samples even in such a case. The same part as in the explanation of Fig. 1 will be simplified, and the different part will be explained in detail.

1 is a carrier gas bomb, and oxygen or air may be used as the carrier gas. A carrier gas is led into a reaction tube 11' through a pressure reducer 2, a conduit 3, a flow controller 4, a flow meter 5, a conduit 6, a counter flow preventing capillary tube 7, a conduit 8 and a sample feed part 10'. The reaction tube 11' is preferably a transparent quartz tube having an inside diameter of 12 to 25 mm and a length of 40 to 70 cm, wherein on the carrier gas inlet side, there is provided a liquid sample feed inlet 10" equipped with a septum for introducing a liquid sample by means of a microsyringe, and at the carrier gas oulet side, the outside diameter is reduced to 6 to 10 mm. As a substance, 12 and 14, for fixing the oxidation catalyst or

- 11 -

0075467

oxidizing agent 13 in the reaction tube 11' at both the inlet and outlet sides, quartz cotton or ceramics wool of 1 to 10 µm in diameter may be used. As an electric furnace 15 for heating the reaction tube 11', such a one is suitable that the temperature can freely be controlled in the range of 400°C to 1,200°C.

For introducing a solid or viscous liquid sample into the reaction tube, the sample feed part 10' is opened, a sample feed rod 9' is pulled out, a boad 9" to carry the sample thereon is set at the tip of the rod, and then the rod is inserted so that the boat is situated just below a liquid sample feed inlet 10". Thereafter, the sample feed part is closed, and then the boat carrying the sample is moved, by sliding the sample feed rod, to the high-temperature region of the reaction tube to burn the sample.

An organic solvent or aqueous solution sample is sampled by means of a microsyringe, added dropwise onto the boat 9" from the liquid sample feed inlet 10", and burned at the high-temperature region of the reaction tube by sliding the sample feed rod 9' so that the boat 9" reaches the region. When the boat is made of platinum having a high thermal conductivity, organic samples are decomposed by explosive combustion, and hence, it is desirable to employ a boat made of quartz having a low thermal conductivity. Volatile samples are sometimes ignited before they reach the high-temperature region, and therefore, it is desirable to mount an air-cooling conduit 30 in the vicinity of the liquid sample feed inlet, and to cool with an air-cooling pump 29.

Gaseous products such as $H_2O$, $CO_2$, NO, $NO_2$, etc. formed by the combustion of the introduced sample are led into an oxidation tube 17 through a conduit 23' together with a carrier gas, and nitrogen monoxide is oxidized into nitrogen dioxide by an acid potassium permanganate solution 18 with the aid of dispersing effect of a glass filter 19. The gas leaving the oxidation tube 17 is introduced into an absorption/color development liquid 26, in a threaded test tube 25 through a splash removing tube 20, conduits 21 and 24, and a glass filter 27, and nitrogen dioxide in the gas is absorbed to develop a color by diazotization/coupling reaction.  Before and after the absorption/color development operation of nitrogen dioxide, it is desirable to mount a cap 28 and seal tightly until comletion of absorbance measurement by spectrophotometer in order to eliminate errors due to the absorption of nitrogen dioxide in air. Further, the amount of nitrogen dioxide in the gaseous product leaving the reaction tube can be known by direct connection of conduits 23' and 24.

The present invention will be illustrated by the following examples, but should not be construed to be limited thereto.

Example 1

Using the apparatus shown in Fig. 1, 100  1 of an aqueous solution of urea, sodium nitrate, ammonium sulfate and glycine each containing a total nitrogen of 10 ppm was intorudced into the apparatus by means of a microsyringe under the conditions shown below, and the ability of the oxidation catalyst or oxidizing agent combined with temperature to convert the nitrogen compounds to nitrogen oxides was measured.

The reaction tube used was a transparent quartz tube of the following dimention: outside diameter, 18 mm; inside diameter, 15 mm; total length, 33 cm; and the outside and inside diameters of the lowest part of 5 cm in length, 8 mm and 5 mm, respectively. The part of 15 mm in inside diameter of the reaction tube was packed with the following layers upward from the lower end: the lower layer of about 30 mm in length comprising 1 to 6 μm quartz cotton; the middle layer of 130 mm in length comprising 1.4 wt% palladium or platinum supported on 370 to 840 μm alumina (as oxidation catalyst), or 370 to 840 μm granular tricobalt tetroxide, 370 to 840 μm granular porous copper oxide or linear copper oxide of 0.6 mm in diameter and 2 to 5 mm in length (as oxidizing agent); and the upper layer of about 20 mm in length comprising 1 to 6 μm quartz cotton. The raction tube was inserted into an electric furnace of 24 cm in length and used at various temperatures of 500°C , 550°C, 600°C, 700°C, 800°C, 900°C, and 1,000°C.

The oxidation tube tube used was a gas absorption tube made of glass (30 mm in inside diameter and 20 cm in height) which had a 10 mmø 2G glass ball filter. To this tube were added 20 ml of an oxidation liquid containing 2.5 wt% of potassium permanganate and 2.5 wt% of sulfuric acid. The splash removing tube made of glass (8 mm in inside diameter and 5 cm in length) was packed with 1 to 6 μm quartz cotton. As the glass filter for absorbing nitrogen dioxide, there was used 10 mmø 2G ball filter, and 5 ml of an absorption/color development liquid was placed in the threaded test tube (24 mm in inside diameter and 15 cm in height) by means of a dispenser. The absorption/color development liquid had a composition of acetic acid, 50 ml/l; sulfanilic acid, 5g/l; and N-(1-naphthyl)ethylenediamine, 50 mg/l. The counter flow preventing capillary tube used was a stainless steel tube of 0.3 mm in inside diameter, 1 mm in outside diameter and 5 cm in length. Oxygen or air was streamed as a carrier gas at a rate of 300 ml/min, absorption/color development was carried out for 5 minutes after introduction of sample, and the threaded test tube was capped and allowed to stand for not less than 2 minutes. Thereafter, the absorption/color development liquid thus operated was transferred to a 1-cm cell and measured for absorbance at 545 nm. When oxygen was used as the carrier gas, the results as shown in Table 1 were obtained. When air was used as the carrier gas, the results as shown in Table 2 were obtained.

In Tables 1 and 2, when the value calculated in the following manner is within 5 % , the condition is effective: Among the measured absorbances of the four components at each temperature, the minimum absorbance is subtracted from the maximum absorbance, and the value obtained is divided by the mean value of the measured absorbances of the four components, and then the value thus obtained is multiplied by 100 to obtain a required value.

In Tables 1 and 2, the region satisfying this condition was shown by surrounding with a thick line.

Table 1

| Temperature (°C) | Catalyst oxidizing agnet / Component | Pd/Al$_2$O$_3$ | Pt/Al$_2$O$_3$ | Co$_3$O$_4$ | CuO (porous) | CuO (linear) |
|---|---|---|---|---|---|---|
| 500 | (NH$_2$)$_2$CO | 0.295 | 0.386 | 0.248 | 0.371 | 0.352 |
| | NaNO$_3$ | 0.322 | 0.327 | 0.236 | 0.303 | 0.379 |
| | (NH$_4$)$_2$SO$_4$ | 0.349 | 0.410 | 0.314 | 0.416 | 0.414 |
| | NH$_2$CH$_2$COOH | 0.312 | 0.406 | 0.072 | 0.405 | 0.403 |
| 550 | (NH$_2$)$_2$CO | 0.390 | 0.412 | 0.347 | 0.395 | 0.388 |
| | NaNO$_3$ | 0.375 | 0.398 | 0.367 | 0.415 | 0.411 |
| | (NH$_4$)$_2$SO$_4$ | 0.391 | 0.410 | 0.366 | 0.413 | 0.420 |
| | NH$_2$CH$_2$COOH | 0.383 | 0.406 | 0.362 | 0.403 | 0.402 |
| 600 | (NH$_2$)$_2$CO | 0.402 | 0.415 | 0.397 | 0.409 | 0.402 |
| | NaNO$_3$ | 0.395 | 0.413 | 0.407 | 0.419 | 0.417 |
| | (NH$_4$)$_2$SO$_4$ | 0.398 | 0.412 | 0.405 | 0.411 | 0.415 |
| | NH$_2$CH$_2$COOH | 0.392 | 0.408 | 0.408 | 0.407 | 0.407 |
| 700 | (NH$_2$)$_2$CO | 0.409 | 0.414 | 0.405 | 0.412 | 0.408 |
| | NaNO$_3$ | 0.404 | 0.417 | 0.408 | 0.418 | 0.417 |
| | (NH$_4$)$_2$SO$_4$ | 0.405 | 0.411 | 0.410 | 0.409 | 0.404 |
| | NH$_2$CH$_2$COOH | 0.398 | 0.415 | 0.412 | 0.407 | 0.400 |
| 800 | (NH$_2$)$_2$CO | 0.407 | 0.410 | 0.397 | 0.405 | 0.399 |
| | NaNO$_3$ | 0.409 | 0.414 | 0.405 | 0.412 | 0.408 |
| | (NH$_4$)$_2$SO$_4$ | 0.400 | 0.412 | 0.399 | 0.400 | 0.386 |
| | NH$_2$CH$_2$COOH | 0.402 | 0.413 | 0.404 | 0.408 | 0.402 |
| 900 | (NH$_2$)$_2$CO | 0.398 | 0.405 | 0.384 | 0.400 | 0.382 |
| | NaNO$_3$ | 0.401 | 0.406 | 0.401 | 0.408 | 0.389 |
| | (NH$_4$)$_2$SO$_4$ | 0.395 | 0.403 | 0.374 | 0.391 | 0.358 |
| | NH$_2$CH$_2$COOH | 0.403 | 0.407 | 0.394 | 0.405 | 0.398 |
| 1000 | (NH$_2$)$_2$CO | 0.393 | 0.402 | | | |
| | NaNO$_3$ | 0.398 | 0.404 | | | |
| | (NH$_4$)$_2$SO$_4$ | 0.386 | 0.395 | | | |
| | NH$_2$CH$_2$COOH | 0.389 | 0.400 | | | |

Table 2

| Temperature (°C) | Catalyst oxidizing agnet Component | $Pd/Al_2O_3$ | $Pt/Al_2O_3$ | $Co_3O_4$ | CuO (porous) | CuO (linear) |
|---|---|---|---|---|---|---|
| 500 | $(NH_2)_2CO$ | 0.362 | 0.391 | 0.353 | 0.377 | 0.353 |
| | $NaNO_3$ | 0.375 | 0.318 | 0.298 | 0.316 | 0.381 |
| | $(NH_4)_2SO_4$ | 0.358 | 0.393 | 0.375 | 0.418 | 0.412 |
| | $NH_2CH_2COOH$ | 0.320 | 0.379 | 0.369 | 0.401 | 0.401 |
| 550 | $(NH_2)_2CO$ | 0.408 | 0.410 | 0.400 | 0.395 | 0.386 |
| | $NaNO_3$ | 0.413 | 0.414 | 0.382 | 0.410 | 0.414 |
| | $(NH_4)_2SO_4$ | 0.408 | 0.411 | 0.406 | 0.417 | 0.419 |
| | $NH_2CH_2COOH$ | 0.393 | 0.404 | 0.411 | 0.409 | 0.395 |
| 600 | $(NH_2)_2CO$ | 0.407 | 0.411 | 0.408 | 0.403 | 0.393 |
| | $NaNO_3$ | 0.415 | 0.416 | 0.418 | 0.412 | 0.417 |
| | $(NH_4)_2SO_4$ | 0.408 | 0.415 | 0.412 | 0.415 | 0.415 |
| | $NH_2CH_2COOH$ | 0.410 | 0.406 | 0.418 | 0.407 | 0.390 |
| 700 | $(NH_2)_2CO$ | 0.409 | 0.412 | 0.412 | 0.406 | 0.396 |
| | $NaNO_3$ | 0.415 | 0.416 | 0.418 | 0.414 | 0.412 |
| | $(NH_4)_2SO_4$ | 0.405 | 0.412 | 0.416 | 0.408 | 0.391 |
| | $NH_2CH_2COOH$ | 0.407 | 0.409 | 0.418 | 0.402 | 0.380 |
| 800 | $(NH_2)_2CO$ | 0.404 | 0.411 | 0.407 | 0.405 | 0.388 |
| | $NaNO_3$ | 0.409 | 0.414 | 0.416 | 0.409 | 0.397 |
| | $(NH_4)_2SO_4$ | 0.401 | 0.408 | 0.402 | 0.402 | 0.381 |
| | $NH_2CH_2COOH$ | 0.406 | 0.406 | 0.412 | 0.400 | 0.373 |
| 900 | $(NH_2)_2CO$ | 0.400 | 0.410 | 0.392 | 0.398 | 0.379 |
| | $NaNO_3$ | 0.405 | 0.413 | 0.413 | 0.404 | 0.383 |
| | $(NH_4)_2SO_4$ | 0.391 | 0.404 | 0.381 | 0.393 | 0.357 |
| | $NH_2CH_2COOH$ | 0.402 | 0.402 | 0.403 | 0.394 | 0.370 |
| 1000 | $(NH_2)_2CO$ | 0.395 | 0.405 | | 0.392 | 0.368 |
| | $NaNO_3$ | 0.402 | 0.407 | | 0.399 | 0.379 |
| | $(NH_4)_2SO_4$ | 0.381 | 0.393 | | 0.386 | 0.348 |
| | $NH_2CH_2COOH$ | 0.397 | 0.399 | | 0.389 | 0.365 |

Example 2

In the case of nitrogen oxides in the usual atmospheric analysis, the object of measurement is a gas of relatively low concentration. When a nitrogen compound is, however, contained in an aqueous solution as in the method of this invention, even if the compound corresponds to nitrogen of several ppm, it becomes nitrogen oxide gas of very high concentration as compared with the atmospheric analysis. Consequently, the formed nitrogen dioxide may occasionally be not completely absorbed into the absorption/color development liquid. For this reason, trial measurement was made for obtaining a preferred condition in terms of absorption efficiency.

In the apparatus shown in Fig. 1 air was streamed as a carrier gas at a flow rate of 200 to 400 ml/min, and the reaction tube was packed with an oxidation catalyst comprising 1.5 wt% platinum supported on 370 to 840 μm alumina, and used at a temperature of 700°C. As the glass filter for absorbing nitrogen dioxide, there was used 2G or 3G glass filter, and 1 to 3 wt% sodium chloride or 2 wt% potassium sulfate was added to the absorption/color development liquid so that the liquid forms minute bubbles when operated. All other conditions were the same as in Example 1. Each 100 μl of aqueous urea solutions having different total nitrogen contents of 1, 2, 5 and 10 ppm was introduced, and the absorption/color development liquid was measured for absorbance at 545 nm.   The results as shown in Table 3 were obtained.

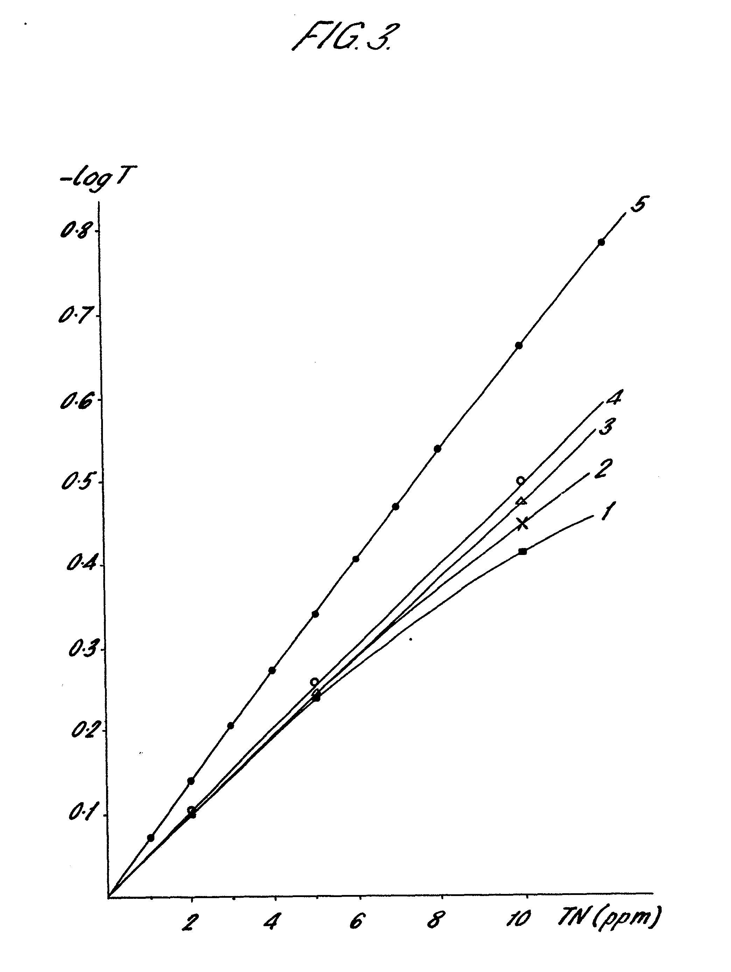

Furthermore, the relation between total nitrogen content and absorbance (calibration curve) of the following cases using urea aqueous solution was shown in Fig. 3:

A case wherein an aqueous sodium nitrite solution was added to the absorption/color development liquid so that the nitrogen content was 1 to 12 ppm, and the liquid was lightly shaken, allowed to stand for not less than 7 minutes to develop a color, and then measured for absorbance;

cases in Table 3 wherein the flow rate of air was 300 ml/min, no salt was added, and 2G and 3G glass filters were used; and

cases in Table 3 wherein 2 wt% sodium chloride was added to the absorption/color development liquid and 2G and 3G glass filters were used.

In Fig. 3, 1 is the case using an absorption/color development liquid without addition of salt and a 2G glass filter; 2 is the case using an absorption/color development liquid without addition of salt and a 3G glass filter; 3 is the case using an absorption/color development liquid containing 2 wt% sodium chloride and a 2G glass filter; 4 is the case using an absorption/color development liquid containing 2 wt% sodium chloride and a 3G glass filter; and 5 is a calibration curve obtained by plotting a relation between absorbance and total nitrogen content, the absorbance being obtained by adding an aqueous sodium nitrite solution to the absorption/color development liquid so that the nitrogen content was 1 to 12 ppm to develop a color.

Table 3

| Salt concentration (wt%) | Total nitrogen (ppm) | Filter: 2G Flow amount of air (ml/min) | | | | | Filter: 3G Flow amount of air (ml/min) | | | | |
|---|---|---|---|---|---|---|---|---|---|---|---|
| | | 200 | 250 | 300 | 350 | 400 | 200 | 250 | 300 | 350 | 400 |
| 0 % | 1.0 | 0.049 | 0.050 | 0.049 | 0.050 | 0.050 | 0.050 | 0.051 | 0.051 | 0.051 | 0.050 |
| | 2.0 | 0.097 | 0.098 | 0.099 | 0.098 | 0.097 | 0.100 | 0.102 | 0.102 | 0.103 | 0.102 |
| | 5.0 | 0.228 | 0.234 | 0.233 | 0.232 | 0.231 | 0.233 | 0.236 | 0.237 | 0.237 | 0.236 |
| | 10.0 | 0.387 | 0.406 | 0.411 | 0.412 | 0.408 | 0.432 | 0.445 | 0.448 | 0.450 | 0.447 |
| NaCl 1 % | 1.0 | | | | | | 0.051 | 0.052 | 0.052 | 0.051 | 0.051 |
| | 2.0 | | | | | | 0.102 | 0.103 | 0.102 | 0.103 | 0.102 |
| | 5.0 | | | | | | 0.244 | 0.250 | 0.251 | 0.250 | 0.247 |
| | 10.0 | | | | | | 0.465 | 0.478 | 0.480 | 0.481 | 0.479 |
| NaCl 2 % | 1.0 | | 0.051 | 0.050 | 0.051 | 0.051 | | 0.051 | 0.051 | 0.052 | 0.051 |
| | 2.0 | | 0.103 | 0.101 | 0.102 | 0.102 | | 0.102 | 0.103 | 0.104 | 0.102 |
| | 5.0 | | 0.244 | 0.243 | 0.245 | 0.239 | | 0.252 | 0.251 | 0.252 | 0.250 |
| | 10.0 | | 0.476 | 0.475 | 0.478 | 0.473 | | 0.495 | 0.494 | 0.497 | 0.491 |
| NaCl 3 % | 1.0 | | | | | | | 0.052 | 0.051 | 0.051 | 0.050 |
| | 2.0 | | | | | | | 0.103 | 0.102 | 0.102 | 0.101 |
| | 5.0 | | | | | | | 0.245 | 0.249 | 0.247 | 0.244 |
| | 10.0 | | | | | | | 0.487 | 0.490 | 0.488 | 0.485 |
| $K_2SO_4$ 2 % | 1.0 | | | | | | | 0.051 | 0.051 | 0.052 | 0.050 |
| | 2.0 | | | | | | | 0.103 | 0.101 | 0.102 | 0.101 |
| | 5.0 | | | | | | | 0.247 | 0.244 | 0.246 | 0.244 |
| | 10.0 | | | | | | | 0.489 | 0.485 | 0.485 | 0.480 |

As is apparent from Fig.3 and Table 3, the relation between amount of nitrous nitrogen and absorbance of the absorption/color development liquid to which nitrite ions have been added directly, shows a minutely curved line, but in the region of absorbance of not more than 0.5, said relation may be considered to be an approxiamtely good straight line. But, when absorption/color development liquids containing no salt are used, the relation between nitrogen amount and absorbance clearly takes a curve. Contrary to this, when absorption/color development liquids containing a salt are used, air bubbles generated from the glass filter become more minute, and absorption of nitrogen dioxide is carried out almost completely, so that the relation takes a good straight line.

In the analysis of nitrogen dioxide in atmosphere according to Saltzman method, the ratio of a nitrite ion formed by absorption of nitrogen dioxide into the absorption/color development liquid to the total nitrite ion, that is, $NO_2^-/NO_2$ is called "Saltzman coefficient", and its value is reported to be 0.72. The coefficient was supported to be appropriate by many people and has come to be widely used in the analysis of nitrogen oxides in atmosphere.

While the ratio of the following two cases' nitrogen concentrations at which the absorbances of both cases show the same value (B/A) was found to be 0.71 to 0.74: case A wherein an aqueous sodium nitrite solution was added directly to the absorption/color development liquid to develop a color; and case B in Table 3 (Example 2) wherein the flow amount of air was not less than 250 ml/min, 3G glass filter was used, and 1 to 3 wt% sodium chloride or 2 wt% potassium sulfate was added to the absorption/color development liquid. The result shows the approximate agreement with the Saltzman coefficient. That is, this result means that, according to the method of the present invention, almost 100 % of nitrogen compounds in an aqueous solution is converted into nitrogen dioxide.

Example 3

Using the apparatus shown in Fig. 1, procedure was carried out under the same conditions as in Example 1 except that the flow amount of carrier gas was 300 ml/min, 2 wt% sodium chloride was added to the absorption/color development liquid and 10 mmø 3G glass filter was used for absorbing nitrogen dioxide. 100 µl of an aqueous solution containing each of urea, sodium nitrate, ammonium sulfate, glycine and m-dinitrobenzene in a total nitrogen content of 10 ppm was introduced into the reaction tube, in which the oxidation catalyst or oxidizing agent was kept at a temperature of 600°C to 800°C, to convert the nitrogen compound into nitrogen monoxide and nitrogen dioxide, and then treated as follows: On one hand, by passing the carrier gas through the oxidation tube, the gas leaving the reaction tube was caused to pass through the oxidation tube together with the carrier gas to oxidize the nitrogen monoxide into nitrogen dioxide, and then the absorbance of total nitrogen dioxide was measured; on the other hand, the gas leaving the reaction tube was not passed through the oxidation tube, and the absorbance of nitrogen dioxide alone formed in the reaction tube was measured. Using the absorbances thus obtained, the ratio of $NO_2/(NO+NO_2)$ (both $NO_2$ and NO gases were formed in the reaction tube) was obtained. The results are shown in Table 4.

Table 4

| Catalyst | Gas | Temperature (°C) | $(NH_2)_2CO$ | $NaNO_3$ | $(NH_4)_2SO_4$ | $NH_2CH_2COOH$ | $C_6H_4(NO_2)_2$ |
|---|---|---|---|---|---|---|---|
| CuO (porous) | Air | 600<br>800 | 0.498<br>0.405 | 0.503<br>0.373 | 0.432<br>0.398 | 0.427<br>0.344 | 0.418<br>0.386 |
| | $O_2$ | 600<br>800 | 0.658<br>0.493 | 0.682<br>0.526 | 0.668<br>0.477 | 0.623<br>0.415 | 0.655<br>0.449 |
| $Co_3O_4$ | Air | 600<br>800 | 0.398<br>0.301 | 0.518<br>0.404 | 0.289<br>0.253 | 0.400<br>0.318 | 0.361<br>0.295 |
| | $O_2$ | 600<br>800 | 0.465<br>0.339 | 0.515<br>0.454 | 0.806<br>0.577 | 0.751<br>0.532 | 0.954<br>0.683 |
| $Pt/Al_2O_3$ | Air | 600<br>700<br>800 | 0.271<br>0.246<br>0.225 | 0.332<br>0.275<br>0.249 | 0.267<br>0.243<br>0.202 | 0.304<br>0.268<br>0.248 | 0.285<br>0.252<br>0.214 |
| | $O_2$ | 600<br>700<br>800 | 0.334<br>0.283<br>0.260 | 0.400<br>0.353<br>0.302 | 0.347<br>0.288<br>0.271 | 0.362<br>0.318<br>0.284 | 0.339<br>0.281<br>0.265 |
| $Pd/Al_2O_3$ | Air | 600<br>700<br>800 | 0.214<br>0.198<br>0.175 | 0.233<br>0.218<br>0.193 | 0.237<br>0.220<br>0.195 | 0.206<br>0.183<br>0.160 | 0.225<br>0.211<br>0.187 |
| | $O_2$ | 600<br>700<br>800 | 0.394<br>0.340<br>0.307 | 0.466<br>0.412<br>0.380 | 0.379<br>0.338<br>0.295 | 0.426<br>0.370<br>0.333 | 0.395<br>0.341<br>0.314 |

0075467

Measurment conditions in which the variation of the $NO_2/(NO+NO_2)$ ratio is samller among the nitrogen compounds may be said to be more desirable in terms of determinability and reproducibility.

Also, when air is used as a carrier gas and an oxidation catalyst (palladium supported on alumina) is used at 800°C, so far as the nitrogen compounds used in Example 3 are concerned, 82 ± 2 % of nitrogen is converted into nitrogen monoxide, and therefore, it can be detected and determined effectively by the chemiluminescence method.

Example 4

Using the apparatus shown in Fig. 1, procedure was carried out under the same conditions as in Example 3 except that air was streamed at a flow rate of 300 ml/min and an oxidation catalyst (1.5 wt% platinum supported on alumina) was used at 700°C. Aqueous solutions of various nitrogen compounds were prepared, and 5 to 400  1 of each of the solutions prepared was introduced into the reaction tube by means of a microsyringe, and then the absorbance was measured using 1-cm and 3-cm cells to obtain the total nitrogen content, with reference to aqueous urea solutions having total nitrogen contents of 1, 10 and 200 ppm as standard.  The results are shown in Table 5.

Table 5

| Nitrogen component | Amount of sample (µl) | Cell length (cm) | Known concentration TN (ppm) | Measured value TN (ppm) | | | |
|---|---|---|---|---|---|---|---|
| | | | | 1 | 2 | 3 | $\bar{x}$ |
| $NaNO_3$ | 5 | 1 | 200 | 199 | 201 | 203 | 201 |
| $(NH_4)_2SO_4$ | 5 | 1 | 200 | 200 | 197 | 198 | 198 |
| $NH_2OH \cdot HCl$ | 100 | 1 | 10.0 | 10.2 | 10.0 | 10.0 | 10.1 |
| NaCN | 100 | 1 | 10.0 | 9.8 | 9.9 | 9.9 | 9.9 |
| $NH_2$-⟨⟩-$NO_2$ | 200 | 3 | 1.00 | 0.97 | 0.99 | 0.98 | 0.98 |
| $NaNO_2$ | 200 | 3 | 1.00 | 0.99 | 0.99 | 1.01 | 0.99 |
| $NH_2CH_2COOH$ | 200 | 3 | 0.50 | 0.48 | 0.47 | 0.50 | 0.48 |
| $NaNO_3$ | 200 | 3 | 0.50 | 0.51 | 0.50 | 0.51 | 0.51 |
| $(NH_4)_2SO_4$ | 200 | 3 | 0.20 | 0.20 | 0.19 | 0.20 | 0.20 |
| $NH_2$-⟨⟩-$NO_2$ | 200 | 3 | 0.20 | 0.19 | 0.18 | 0.20 | 0.19 |
| $NH_2OH \cdot HCl$ | 200 | 3 | 0.20 | 0.18 | 0.21 | 0.20 | 0.20 |
| $NH_2CH_2COOH$ + 3% NaCl | 200 | 3 | 0.50 | 0.49 | 0.49 | 0.51 | 0.50 |
| $NaNO_3$ + 3% NaCl | 200 | 3 | 0.50 | 0.51 | 0.52 | 0.50 | 0.51 |

(to be continued)

Table 5    (Continued)

| Nitrogen component | Amount of sample (µl) | Cell length (cm) | Known concen- tration TN (ppm) | Measured value TN (ppm) | | | |
|---|---|---|---|---|---|---|---|
| | | | | 1 | 2 | 3 | x̄ |
| $(NH_4)_2SO_4$    + 3% NaCl | 200 | 3 | 0.20 | 0.19 | 0.19 | 0.20 | 0.19 |
| $NH_2$-⬡-$NO_2$  + 3% NaCl | 200 | 3 | 0.20 | 0.21 | 0.19 | 0.19 | 0.20 |
| $NH_2OH \cdot HCl$    + 3% NaCl | 200 | 3 | 0.20 | 0.22 | 0.20 | 0.18 | 0.20 |
| $NaNO_3$ | 400 | 3 | 0.02 | 0.03 | 0.02 | 0.02 | 0.02 |
| $(NH_4)_2SO_4$ | 400 | 3 | 0.02 | 0.02 | 0.02 | 0.01 | 0.02 |

Example 5

Using the apparatus shown in Fig. 2, procedure was carried out under the same conditions as in Example 3 except the following: For a reaction tube there was used a transpatent quartz tube equipped with a liquid sample feed inlet which had an outside diameter of 18 mm, an indise diameter to 15 mm, total length of 55 cm, and the outside and inside diameters of the terminal part of 5 cm in length at the carrier gas outlet side of 8 mm and 5 mm, respectively. The part of 15 mm in inside diameter of the reaction tube was packed with the following layers from the carrier gas outlet side: a layer of about 30 mm in length comprising quartz cotton of 1 to 6 μm in diameter, a layer of about 200 mm in length comprising 370 to 840 μm porous copper oxide and a layer of about 30 mm in length comprising quartz cotton of 1 to 6 μm in diameter. The reaction tube was heated to 900°C in an electric furnace of 35 cm in length. Oxygen was streamed at a rate of 300 ml/min as a carrier gas, 20 μl of each of aqueous solutions, ethanol solutions and toluene solutions of various nitrogen compounds was dropped to a quartz boat ( 10 mm in width, 30 mm in length and 5 mm in depth) by means of a microsyringe. The boat was inserted into the high-temperature region of the reaction tube, and a total nitrogen content was measured with reference to an aqueous urea solution having a nitrogen content of 50 ng/μl as standard. The results are shown in Table 6.

Table 6

| Nitrogen component | Solvent | Known concentration (ng/μl) | Measured value (ng/μl) | | | |
|---|---|---|---|---|---|---|
| | | | 1 | 2 | 3 | $\bar{x}$ |
| Ammonium sulfate | Water | 50.0 | 49.3 | 49.6 | 49.5 | 49.5 |
| Sodium nitrate | Water | 50.0 | 50.4 | 50.3 | 50.5 | 50.4 |
| p-Nitraniline | Water | 50.0 | 49.7 | 50.1 | 50.2 | 50.0 |
| Glycine | Water | 50.0 | 49.9 | 50.2 | 50.1 | 50.1 |
| Acetanilide | Ethanol | 45.3 | 45.0 | 45.0 | 45.3 | 45.1 |
| p-Nitraniline | Ethanol | 49.6 | 50.1 | 49.7 | 49.7 | 49.8 |
| Oxine | Ethanol | 42.1 | 42.0 | 42.4 | 42.5 | 42.3 |
| Urea | Ethanol | 48.0 | 48.3 | 48.0 | 48.6 | 48.3 |
| p-Toluenesulfonamide | Ethanol | 48.4 | 48.6 | 47.9 | 47.9 | 48.1 |
| Nicotinic acid | Ethanol | 51.0 | 51.2 | 51.8 | 51.5 | 51.5 |
| Acetanilide | Toluene | 42.2 | 43.0 | 42.1 | 42.2 | 42.4 |
| m-Dinitrobenzene | Toluene | 45.8 | 46.3 | 46.4 | 46.0 | 46.2 |

Example 6

Using the apparatus shown in Fig. 2 and the same conditons as used in Example 5, 5 to 30 mg of solid and viscous liquid samples each containing a trace amount of nitrogen was accurately weighed into a quartz boat on a semi-micro balance, and the total nitrogen content was measured with reference to an aqueous urea solution having a nitrogen content of 50 ppm as standard. For comparison purpose, 0.1 to 2 g of the samples each was weighed and measured for a total nitrogen content by the Kjeldahl decomposition/indophenol method. The results are shown in Table 7.

Table 7

| Sample | Measured value of total nitrogen (ppm) | | | Measured value by Kjeldahl method (ppm) | | |
|---|---|---|---|---|---|---|
| | 1 | 2 | 3 | 1 | 2 | 3 |
| Polymer (A) | 213 | 226 | 222 | 218 | 205 | 229 |
| Polymer (B) | 53.4 | 52.1 | 52.6 | 52 | 55 | 49 |
| Polymer (C) | 27.3 | 27.1 | 28.9 | 28 | 24 | 30 |
| Oil and fat (A) | 123 | 125 | 120 | 131 | 124 | 112 |
| Oil and fat (B) | 86.1 | 84.6 | 85.2 | 85 | 87 | 81 |
| Oil and fat (C) | 40.0 | 39.5 | 39.0 | 42 | 39 | 38 |
| Fine granulated sugar (A) | 24.3 | 24.9 | 24.0 | 23 | 20 | 21 |
| Fine granulated sugar (B) | 13.2 | 13.0 | 13.7 | 12 | 11 | 15 |
| Lubricating oil (A) | 46.6 | 45.9 | 46.2 | 43 | 46 | 50 |
| Lubricating oil (B) | 5.4 | 5.1 | 5.1 | 4 | 4 | 6 |

Example 7

Using the apparatus shown in Fig. 1, procedure was carried out under the same conditions as in Example 4 except sample introducing method. As a sample feeder, a repeating dispenser (Hamilton PB-600) equipped with 2 ml syringe was used, and various kinds of purified water which were introduced 2 ml (= 50 times of 40 µl introduction at one time). Then, total nitrogen were determined in comparison with an aqueous urea standard solution of which total nitrogen was 0.10 ppm. The results are shown in Table 8.

Table 8

| Purified water | Measured value TN (ppm) | | | |
|---|---|---|---|---|
| | 1 | 2 | 3 | $\bar{x}$ |
| Deionized water | 0.043 | 0.047 | 0.044 | 0.045 |
| Distilled water | 0.029 | 0.026 | 0.025 | 0.027 |
| Deionized and distilled water | 0.020 | 0.018 | 0.020 | 0.019 |
| Twice distilled water | 0.012 | 0.016 | 0.015 | 0.014 |

As described above, according to the analytical method for total trace nitrogen of the present invention, the total nitrogen of trace amounts can be determined cheaply, safely, simply and accurately, since by using a very simple apparatus, oxygen of air as a carrier gas and an oxidation catalyst or oxidizing agent, 100 % of nitrogen compounds in liquid and solid samples can be converted into nitrogen oxides, and nitrogen monoxide can be oxidized into nitrogen dioxide, and the total nitrogen dioxide can be absorbed into the absorption/color development liquid of Saltzman method containing salts to develop a color, and further absorbance can be measured by means of a spectrophotometer which is one of the most popularly used analytical apparatuses.

Particularly, in connection with the nutritional enrichment of sea, lake and marsh, or river which has become a problem in recent years, there have been demanded rapid

0075467

and accurate analytical methods, automatic measurement apparatus or monitoring apparatus for trace nitrogen which can satisfactorily be applied to these environmental water. In this respect, the effect of the method of this invention is extremely large, because automatic total nitrogen measurement apparatus or monitoring apparatus for environmental water become possible with a great ease.

CLAIMS:

1. A method for analyzing total trace nitrogen in a sample which comprises passing oxygen or air as a carrier gas through a reaction tube packed with an oxidation catalyst or oxidizing agent heated at a temperature in the range of from 550°C to 1,000°C, introducing a sample of a nitrogen-containing compound into the reaction tube to convert the compound into nitrogen monoxide and nitrogen dioxide, oxidizing the nitrogen monoxide into nitrogen dioxide with an aqueous acidic potassium permanganate solution, and determining the resultant total nitrogen dioxide.

2. A process as claimed in Claim 1 wherein the oxidation catalyst is a palladium or platinum catalyst.

3. A process as claimed in Claim 2 wherein the catalyst is supported on alumina.

4. A process as claimed in Claim 1 wherein the oxidizing agent is cobalt oxide or granula porous copper oxide.

5. A process as claimed in any one of the preceding claims wherein the determination of the total nitrogen dioxide is carried out by the advanced Saltzman method.

6.    A process as claimed in Claim 5 wherein an improved efficiency of absorption of nitrogen dioxide is achieved by adding not less than 1% of a neutral salt to the absorption/colour development liquid.

7.    A process as claimed in Claim 6 wherein the neutral salt is sodium chloride, potassium chloride, sodium sulfate or potassium sulfate.

8.    A process as claimed in any one of the preceding claims wherein the concentration of potassium permanganate in the aqueous acidic potassium permanganate solution is from 1 to 6 wt%.

*FIG. 1.*

*FIG. 2.*

FIG.3.

European Patent
Office

**EUROPEAN SEARCH REPORT**

| Category | Citation of document with indication, where appropriate, of relevant passages | Relevant to claim |
|---|---|---|
| | **DOCUMENTS CONSIDERED TO BE RELEVANT** | |
| X | DE - A1 - 2 434 930 (BECKMAN INSTRUMENTS) <br> * claims 1, 3, 4, 9 * <br> & US - A - 3 877 875 <br> --- | 1,4 |
| A | DE - A - 1 623 066 (SHELL INTERNATIONALE RESEARCH) <br> * claims 1, 5, 7 * <br> -- | 1 |
| A | US - A - 3 835 322 (I. KOMATSU) <br> * claim 1; column 3, lines 58 to 61 * <br> -- | 1,5 |
| A | US - A - 3 681 027 (A.B. SMITH) <br> * whole document * <br> ----- | 5 |

**CLASSIFICATION OF THE APPLICATION (Int. Cl. 3)**

G 01 N 31/12

**TECHNICAL FIELDS SEARCHED (Int.Cl. 3)**

G 01 N 31/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search <br> Berlin | Date of completion of the search <br> 04-11-1982 | Examiner <br> SCHWARTZ |
|---|---|---|

EPO Form 1503.1  06.78